# EUROPÄISCHE PATENTANMELDUNG

(11) **EP 1 096 646 A2**
(43) Veröffentlichungstag der Anmeldung: **02.05.2001**
(21) Anmeldenummer: 00122111.8
(22) Anmeldetag: 12.10.2000
(51) Int. Cl.: H02K 5/167

(54) **Elektromotor**

(30) Priorität: 29.10.1999 DE 19952201
(71) Anmelder: Bühler Motor GmbH, 90459 Nürnberg (DE)
(72) Erfinder: Martin, Gunther, 90478 Nürnberg (DE)

(57) **Zusammenfassung**

Die Erfindung betrifft einen Elektromotor, mit einem Rotor, mit Rotorwelle und einem Stator, der zumindest einen Lagerschild umfasst, der eine zylindrische Kugellager-Aufnahme aufweist. Bekannte Elektromotoren dieser Art sind nur für die Verwendung von Kugellagern geeignet. Um auch Kalottenlager im Lagerschild aufnehmen zu können, müssen erhebliche Nachteile wie undefinierte Haltekraft, zu großer Kippwinkel etc. in Kauf genommen werden. Eine einwandfreie Lösung ist bisher nur mit einem auf das Kalottenlager abgestimmten Lagerschild möglich. Dies erfordert höhere Aufwendungen für Lagerhaltung und Logistik, und ist unwirtschaftlich. Daher ist es Aufgabe der vorliegenden Erfindung, einen Elektromotor zu schaffen, bei dem mit einem Lagerschild-Typ sowohl Kugellager, als auch Kalottenlager verwendbar sind, wobei das Kalottenlager mit einer definierten Haltekraft und einem geringen Kippwinkel sicher gehalten werden kann und eine geringe Streuung der Haltekraft erzielbar ist. Diese Aufgabe wird erfindungsgemäß dadurch gelöst, dass an die zylindrische Kugellager-Aufnahme eine Kalottenlager-Aufnahme anschließt, wobei der Durchmesser der Kalottenlager-Aufnahme deutlich kleiner ist, als der Durchmesser der zylindrischen Kugellager-Aufnahme und ein Kalottenlager in der Kalottenlager-Aufnahme durch eine Kalottenfeder gehalten wird, die eine Kippbarkeit des Kalottenlagers erlaubt, diese aber eng begrenzt, an dem als Anschlag dienenden Boden der zylindrischen Kugellager-Aufnahme anliegt, sich an der zylindrischen Umfangswand der zylindrischen Kugellager-Aufnahme verkrallt und das Kalottenlager auf der der Kalottenlager-Aufnahme abgewandten Seite federnd gegen die Kalottenlager-Aufnahme drückt.

## Beschreibung

Die Erfindung betrifft einen Elektromotor, mit einem Rotor, mit Rotorwelle und einem Stator, der zumindest einen Lagerschild umfasst, der eine zylindrische Kugellager-Aufnahme aufweist.

Bekannte Elektromotoren dieser Art sind nur für die Verwendung von Kugellagern geeignet, da diese wesentlich mehr Einbauraum benötigen, als Kalottenlager. Soll aus technischen oder wirtschaftlichen Gründen ein Kalottenlager verwendet werden, so ist dies nicht ohne weiteres mit dem selben Lagerschild möglich oder es müssen erhebliche Nachteile, wie undefinierte Haltekraft, zu großer Kippwinkel etc. in Kauf genommen werden. Eine einwandfreie Lösung ist bisher nur mit einem auf das Kalottenlager abgestimmten Lagerschild möglich. Dies erfordert höhere Aufwendungen für Lagerhaltung und Logistik, und ist unwirtschaftlich.

Kalottenlager besitzen sphärische Flächen, die zum Ausgleich von Fluchtungsfehlern, die sich aus der Toleranzkette des Motorgehäuses, der Lagerschilde und des Kalottenlagers ergeben, eine Verkippung des Kalottenlagers erlauben. Herkömmliche Kalottenfedern erzeugen eine auf die sphärischen Flächen des Kalottenlagers wirkende Kraft, die das Kalottenlager in einer konkreten Position, aber nur zufälligen Ausrichtung der Achse hält. Durch einen sich so zufällig einstellenden Kippwinkel kann die Montage der Welle unmöglich sein.

Aufgabe der vorliegenden Erfindung ist es daher einen Elektromotor zu schaffen, bei dem mit einem Lagerschild-Typ sowohl Kugellager, als auch Kalottenlager verwendbar sind, wobei das Kalottenlager mit einer definierten Haltekraft und einem geringen Kippwinkel sicher gehalten werden kann und eine geringe Streuung der Haltekraft erzielbar ist.

Diese Aufgabe wird erfindungsgemäß dadurch gelöst, dass an die zylindrische Kugellager-Aufnahme eine Kalottenlager-Aufnahme anschließt, wobei der Durchmesser der Kalottenlager-Aufnahme deutlich kleiner ist, als der Durchmesser der zylindrischen Kugellager-Aufnahme und ein Kalottenlager in der Kalottenlager-Aufnahme durch eine Kalottenfeder gehalten wird, die eine Kippbarkeit des Kalottenlagers erlaubt, diese aber eng begrenzt, an dem als Anschlag dienenden Boden der zylindrischen Kugellager-Aufnahme anliegt, sich an der zylindrischen Umfangswand der zylindrischen Kugellager-Aufnahme verkrallt und das Kalottenlager auf der der Kalottenlager-Aufnahme abgewandten Seite federnd gegen die Kalottenlager-Aufnahme drückt. Da bei Kalottenlagern nur relativ kleine Auflagerflächen notwendig sind und nur eine Seite des Kalottenlagers im Lagerschild gelagert werden muss, geht mit der zusätzlichen Kalottenlager-Aufnahme nur eine geringfügige Verlängerung des Motors einher und sie erlaubt sowohl den Einbau von Kugellagern als auch von Kalottenlagern. Dadurch werden die Aufwendungen für die Lagerhaltung geringer. Da Kalottenlager bei gleichem Wellendurchmesser in der Regel einen deutlich kleineren Durchmesser als Kugellager aufweisen, besitzt auch die entsprechende Kalottenlager-Aufnahme einen deutlich kleineren Außendurchmesser. Deshalb ist hierbei keine Kippsicherung vorhanden, die für eine einwandfreie Montage der Rotorwelle notwendig ist. Eine geringe Kippbarkeit ist jedoch erwünscht, um Fluchtungsfehler auszugleichen. Daher ist eine Kalottenfeder vorgesehen, die zwar eine eng begrenzte, die Toleranzen der Toleranzkette ausgleichende Kippbarkeit des Kalottenlagers erlaubt, eine darüber hinausgehende Verkippung des Kalottenlagers aber sicher verhindert. Die Kalottenfeder ist so ausgelegt, dass sie bei der Montage an den als Anschlag dieneneden Boden der zylindrischen Kugellager-Aufnahme anliegt Auf diese Weise ist die Haltekraft der Kalottenfeder nicht von Montagebedingungen, sondern allein von der Geometrie der Kalottenfeder und des Kalottenlagers abhängig. Dies führt zu einer engen Begrenzung der Streuung bei der Haltekraft. Ein sicherer Halt der Kalottenfeder im Lagerschild wird dadurch erreicht, dass die Kalottenfeder sich in der inneren zylindrischen Umfangswand der zylindrischen Kugellager-Aufnahme verkrallt. Der federnde Bereich dient dazu, das Kalottenlager in der sphärischen Aufnahme am Lagerschild zu halten, zu zentrieren und eine unbeabsichtigte Verkippung des Kalottenlagers vor der Montage der Motorwelle zu verhindern.

Weitere vorteilhafte Weiterbildungen der Erfindung werden in den Unteransprüchen dargestellt.

Vorzugsweise besteht die Kalottenfeder aus einem Befestigungsbereich, einem axialen Anschlagbereich, einem Kippbegrenzungsbereich und einem federnden Bereich, die in dieser Reihenfolge aneinander anschließen. Dadurch ist eine klare Abgrenzung der einzelnen Funktionen voneinander gegeben, wodurch eine höhere Genauigkeit und Funktionssicherheit erreicht wird.

Es ist vorgesehen, den Kippbegrenzungsbereich im wesentlichen zylindrisch und mit einem größeren Durchmesser, als den Außendurchmesser des Kalottenlagers auszubilden. Da auch Kalottenlager in der Regel einen zylindrischen Bereich zwischen den sphärischen Bereichen aufweisen, hängt der Kippwinkel von der Länge des Kippbegrenzungsbereichs und dem Durchmesserunterschied zwischen der Kalottenfeder und dem Kalottenlager ab. Es ist also leicht ein definierter Kippwinkel vorzubestimmen.

Weiter ist vorgesehen, den axialen Anschlagbereich im wesentlichen scheibenförmig auszubilden, ihn flanschartig am zylindrischen Kippbegrenzungsbereich anschließen zu lassen und mit einem größeren Durchmesser als den Kippbegrenzungsbereich zu versehen. Dadurch ist ein definierter Anschlag an dem ohnehin vorhandenen Boden der zylindrischen Kugellager-Aufnahme gegeben. Zudem ermöglicht er die Anformung des Befestigungsbereichs.

Zweckmäßigerweise ist der Befestigungsbereich im wesentlichen kegelförmig ausgebildet, weist einen größeren Durchmesser als der axiale Anschlagbereich auf und liegt auf der Innenseite der zylindrischen Kugellager-Aufnahme unter Vorspannung an. Dadurch ist es möglich die Kalottenfeder auf einfache Weise zu montieren und diese in ihrer Endposition durch Verkrallen zu sichern.

Der federnde Bereich weist einen geringeren Durchmesser auf, als der zylindrische Kippbegrenzungsbereich, um das Kalottenlager sicher festhalten zu können. Darüber hinaus ist der federnde Bereich im wesentlichen kegelig oder sphärisch ausgebildet und liegt an der sphärischen Fläche des Kalottenlagers unter Vorspannung an. Dadurch wird das Kalottenlager zentriert und mit einer vordefinierten Kraft an die Kalottenlager-Aufnahme angedrückt.

Nach einer ersten Variante bildet der federnde Bereich eine durchgehende Fläche. Dadurch kann die Kalottenfeder sehr große Axialkräfte aufnehmen, ohne nachzugeben und der Auslenkwinkel ist über den Umfang gleichbleibend.

Bei einer zweiten Variante ist der federnde Bereich unterbrochen ausgebildet, so dass er aus mehreren federnden Haltefingern besteht. Diese Haltefinger sind zur einfacheren Herstellung entsprechend ihrer möglichen Platinenkontur spitz zulaufend ausgebildet. Hierbei ist eine wesentlich einfachere Herstellung durch Biegen möglich und auf das aufwendigere Tiefziehverfahren kann verzichtet werden.

Eine sichere Montage ist dann gewährleistet, wenn der Kippwinkel α des Kalottenlagers kleiner als +/-5° ist. Bei diesem Kippwinkel und einer üblichen Fase am Wellenende der Rotorwelle ist diese stets in das Kalottenlager einführbar.

Vorzugsweise ist die Kalottenlager-Aufnahme sphärisch ausgebildet Sie passt sich so optimal an eine der sphärischen Flächen des Kalottenlagers an.

Nachfolgend werden Ausführungsbeispiele der Erfindung anhand der Zeichnung näher erkläutert.

Es zeigen:
Fig. 1 eine Schnittansicht eines Lagerschilds vor Einbau einer Rotorwelle, mit einer Schiefstellung des Kalottenlagers um den Winkel α,
Fig. 2 eine Schnittansicht des Lagerschilds nach Einbau der Rotorwelle,
Fig. 3 eine Schnittansicht einer Kalottenfeder,
Fig. 4 eine räumliche Darstellung einer ersten Variante der Kalottenfeder,
Fig. 5a und 5b räumliche Darstellungen einer zweiten Variante der Kalottenfeder und
Fig. 6 eine Schnittansicht des Lagerschilds mit einem Kugellager.

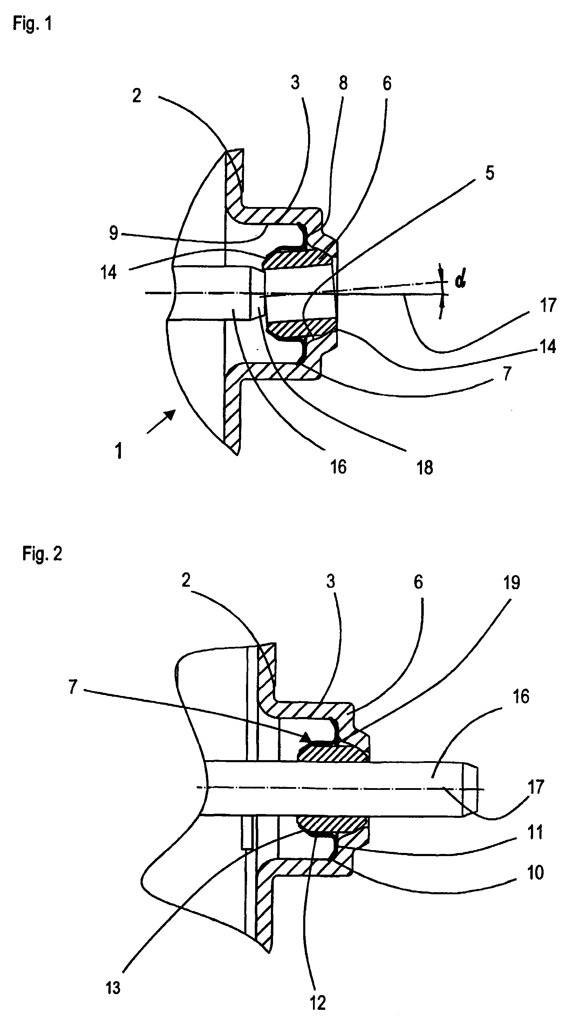

Fig. 1 zeigt eine Schnittansicht eines Lagerschilds 2 eines Elektromotors 1 vor Einbau einer Rotorwelle 16 in ein Kalottenlager 6, das in einer Kalottenlager-Aufnahme 5, die am Anschluss an eine Kugellager-Aufnahme 3 mit dem Lagerschild 2 einstückig ist, einer Kalottenfeder 7, die im Boden 8 der Kugellager-Aufnahme 3 anliegt und an einer sphärischen Fläche 14 des Kalottenlagers 6 federnd anliegt Das Kalottenlager ist in Bezug auf eine Motorachse 17 um den Winkel α gekippt Dieser Kippwinkel ist so gering, dass die Rotorwelle 16 mit Hilfe einer Fase 18 problemlos in das Kalottenlager eingeführt werden kann. Der Lagerschild kann sowohl aus Stahl, Zinkdruckguss, Aluminium, Kunststoff oder einem vergleichbaren Material hergestellt sein.

Fig. 2 zeigt eine Schnittansicht des Lagerschilds 2 nach Einbau der Rotorwelle 16, mit der Kalottenfeder 7, dem Kalottenlager 6 und der Kugellager-Aufnahme 3, die einen wesentlich größeren Durchmesser aufweist, als das Kalottenlager 6. Auch im eingebauten Zustand kann das Kalottenlager 6 gegenüber der idealen Motorachse 17 leicht gekippt sein, wenn Fertigungsungenauigkeiten zu Fluchtungsfehlern geführt haben. Wenn auch ein zweites Lager ein Kalottenlager ist, können diese Fluchtungsfehler problemlos ausgeglichen werden. Daher ist zwischen einem Kippbegrenzungsbereich 12 und dem Kalottenlager 6 ein geringer Zwischenraum 19 vorgesehen, der eine begrenzte Kippbarkeit des Kalottenlagers 6 zulässt. Die Kalottenfeder 7 weist einen Befestigungsbereich 10, einen axialen Anschlagbereich 11, einen Kippbegrenzungsbereich 12 und einen federnden Bereich 13 auf.

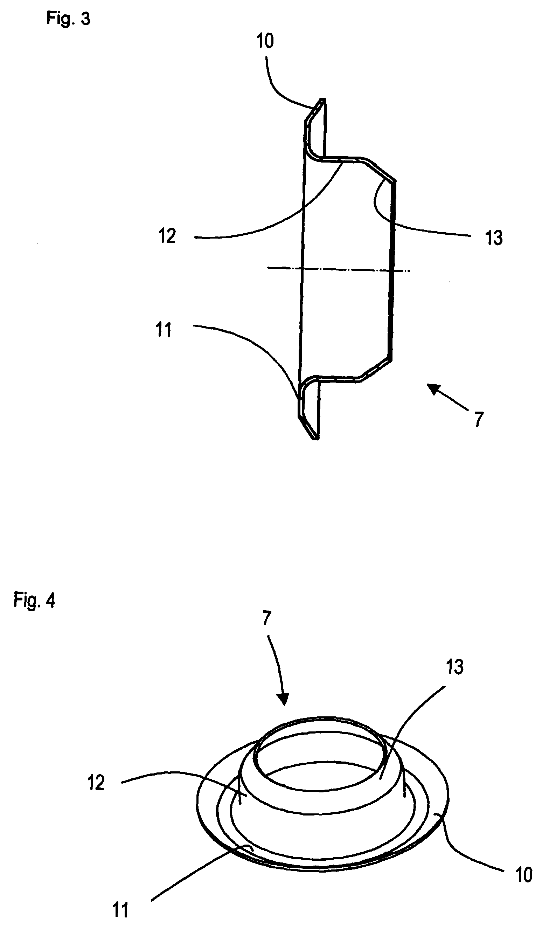

Fig. 3 zeigt eine Schnittansicht der Kalottenfeder 7, mit dem Befestigungsbereich 10, dem axialen Anschlagbereich 11, dem Kippbegrenzungsbereich 12 und dem federnden Bereich 13. Die einzelnen Bereiche schließen aneinander an, haben aber jeweils unterschiedliche Funktionen, die völlig unabhängig voneinander sind.

In Fig. 4 ist eine erste Variante der Kalottenfeder 7, mit dem Befestigungsbereich 10, dem axialen Anschlagbereich 11, dem Kippbegrenzungsbereich 12 und dem federnden Bereich 13, der als eine durchgehende kegelige Fläche ausgebildet ist, dargestellt.

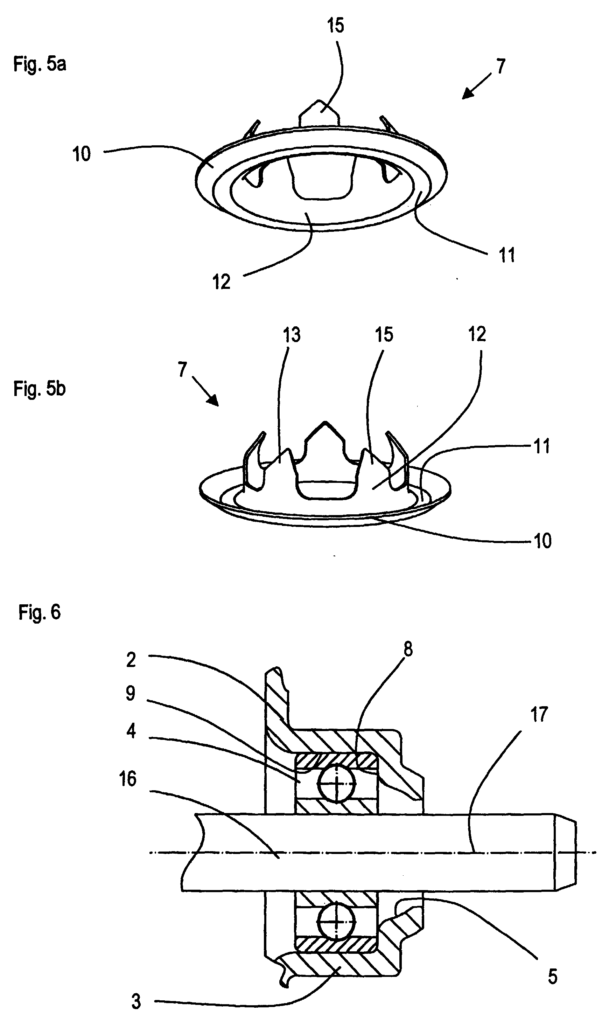

Die Fig. 5a und 5b zeigen eine zweite Variante der Kalottenfeder 7, mit dem Befestigungsbereich 10, dem axialen Anschlagbereich 11, dem Kippbegrenzungsbereich 12 und dem federnden Bereich 13, der hier durch fünf spitz zulaufende Haltefinger 15 gebildet wird.

Fig. 6 zeigt eine Schnittansicht des Lagerschilds 2 mit einem Kugellager 4, das in der Kugellager-Aufnahme 3 eingebaut ist und die Rotorwelle 16 lagert. Das Kugellager 4 liegt an der zylindrischen Umfangswand 9 und axial am Boden 8 der Kugellager-Aufnahme 3 an. Die Kalottenlager-Aufnahme 5 ist hier ohne Funktion.

### Bezugszeichenliste

- 1: Elektromotor
- 2: Lagerschild
- 3: Kugellager-Aufnahme
- 4: Kugellager
- 5: Kalottenlager-Aufnahme
- 6: Kalottenlager
- 7: Kalottenfeder
- 8: Boden
- 9: zylindrische Umfangswand
- 10: Befestigungsbereich der Kalottenfeder
- 11: axialer Anschlagbereich der Kalottenfeder
- 12: Kippbegrenzungsbereich der Kalottenfeder
- 13: federnder Bereich der Kalottenfeder
- 14: sphärische Fläche am Kalottenlager
- 15: Haltefinger
- 16: Rotorwelle
- 17: Motorachse
- 18: Fase
- 19: Zwischenraum
- α: Kippwinkel

## Patentansprüche

1. Elektromotor (1), mit einem Rotor, mit Rotorwelle und einem Stator, der zumindest einen Lagerschild (2) umfasst, der eine zylindrische Kugellager-Aufnahme (3) aufweist, **dadurch gekennzeichnet**, dass an die zylindrische Kugellager-Aufnahme (3) eine Kalottenlager-Aufnahme (5) anschließt, wobei der Durchmesser der Kalottenlager-Aufnahme (5) deutlich kleiner ist, als der Durchmesser der zylindrischen Kugellager-Aufnahme (3) und ein Kalottenlager (6) in der Kalottenlager-Aufnahme (5) durch eine Kalottenfeder (7) gehalten wird, die eine Kippbarkeit des Kalottenlagers (6) erlaubt, diese aber eng begrenzt, an dem als Anschlag dienenden Boden (8) der zylindrischen Kugellager-Aufnahme (3) anliegt, sich an der zylindrischen Umfangswand (9) der zylindrischen Kugellager-Aufnahme (3) verkrallt und das Kalottenlager (6) auf der der Kalottenlager-Aufnahme (5) abgewandten Seite federnd gegen die Kalottenlager-Aufnahme (5) andrückt.

2. Elektromotor nach Anspruch 1, **dadurch gekennzeichnet**, dass die Kalottenfeder (7) aus einem Befestigungsbereich (10), einem axialen Anschlagbereich (11), einem Kippbegrenzungsbereich (12) und einem federnden Bereich (13) besteht, die in dieser Reihenfolge aneinander anschließen.

3. Elektromotor nach Anspruch 2, **dadurch gekennzeichnet**, dass der Kippbegrenzungsbereich (12) im wesentlichen zylindrisch ausgebildet ist und einen geringfügig größeren Durchmesser aufweist, als der Außendurchmesser des Kalottenlagers (6).

4. Elektromotor nach Anspruch 2 oder 3, **dadurch gekennzeichnet**, dass der axiale Anschlagbereich (11) im wesentlichen scheibenförmig ausgebildet ist, flanschartig am zylindrischen Kippbegrenzungsbereich (12) anschließt und einen größeren Durchmesser als dieser aufweist.

5. Elektromotor nach Anspruch 2, 3 oder 4, **dadurch gekennzeichnet**, dass der Befestigungsbereich (10) im wesentlichen kegelförmig ausgebildet ist, einen größeren Durchmesser, als der axiale Anschlagbereich (11) aufweist und auf der Innenseite der zylindrischen Kugellager-Aufnahme (3) unter Vorspannung anliegt.

6. Elektromotor nach Anspruch 2, 3, 4 oder 5, **dadurch gekennzeichnet**, dass der federnde Bereich (13) einen geringeren Durchmesser aufweist, als der zylindrische Kippbegrenzungsbereich (12), im wesentlichen kegelig oder sphärisch ausgebildet ist und an einer sphärischen Fläche (14) des Kalottenlagers (6) unter Vorspannung anliegt.

7. Elektromotor nach Anspruch 2, 3, 4, 5 oder 6, **dadurch gekennzeichnet**, dass der federnde Bereich (13) eine zusammenhängende kegelförmige oder sphärische Fläche bildet.

8. Elektromotor nach Anspruch 2, 3, 4, 5 oder 6, **dadurch gekennzeichnet**, dass der federnde Bereich (13) unterbrochen ausgebildet ist, so dass er aus mehreren federnden Haltefingern (15) besteht.

9. Elektromotor nach Anspruch 8, **dadurch gekennzeichnet**, dass drei bis sechs Haltefinger (15) vorgesehen sind.

10. Elektromotor nach Anspruch 8 und 9, **dadurch gekennzeichnet**, dass fünf spitz zulaufende Hattefinger (15) vorgesehen sind.

11. Elektromotor nach zumindest einem der vorhergehenden Ansprüche, **dadurch gekennzeichnet**, dass die Kalottenfeder (7) durch Biegen und/oder Tiefziehen herstellbar ist.

12. Elektromotor nach zumindest einem der vorhergehenden Ansprüche, **dadurch gekennzeichnet**, dass der Kippwinkel α des Kalottenlagers (6) kleiner als +/- 5° ist.

13. Elektromotor nach zumindest einem der vorhergehenden Ansprüche, **dadurch gekennzeichnet**, dass die Kalottenlager-Aufnahme (5) sphärisch ausgebildet ist.
